# Europäisches Patentamt

# European Patent Office

# Office européen des brevets

(19)

(11) Numéro de publication: **0 123 606**
**B1**

(12)

# FASCICULE DE BREVET EUROPÉEN

(45) Date de publication du fascicule du brevet:
**02.09.87**

(51) Int. Cl.⁴: **G 01 N 29/02**

(21) Numéro de dépôt: **84400728.6**

(22) Date de dépôt: **11.04.84**

(54) **Procédé et dispositif de détermination de l'aire interfaciale dans un mélange diphasique comprenant une phase gazeuse en écoulement sous forme de bulles.**

(30) Priorité: **20.04.83 FR 8306473**

(43) Date de publication de la demande:
**31.10.84 Bulletin 84/44**

(45) Mention de la délivrance du brevet:
**02.09.87 Bulletin 87/36**

(84) Etats contractants désignés:
**DE GB IT**

(56) Documents cité:
**FR-A-2 244 172**
**US-A-4 015 464**

**INSTRUMENT SOCIETY OF AMERICA, 19th ANNUAL ISA CONFERENCE AND EXHIBIT, 12-15 octobre 1964, New York, pages 11.1-1-64-1 à 11.1-1-64-8, ISA, Pittsburgh, Pa., US; C.G. HEISIG et al.: "An ultrasonic bubble detector"**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Amblard, Alain, 15, rue Alexis Carrel, F-69008 Lyon (FR)**
Inventeur: **Delhaye, Jean- Marc, 43, Chemin Villebois, F-38100 Grenoble (FR)**
Inventeur: **Favreau, Claude, 19, rue Leo Lagrange, F-38100 Grenoble (FR)**

(74) Mandataire: **Mongrédien, André, c/o BREVATOME 25, rue de Ponthieu, F-75008 Paris (FR)**

EP 0 123 606 B1

## Description

La présente invention a trait aux mélanges diphasiques comprenant une phase liquide dans laquelle s'écoule une phase gazeuse sous forme de bulles, tels que l'on en rencontre, par exemple, dans les colonnes à bulles ou dans les réacteurs chimiques.

De façon plus précise, elle a pour objet de déterminer, dans un tel milieu, la valeur de l'aire interfaciale, c'est-à-dire de la surface de contact entre les bulles gazeuses et la phase liquide par unité de volume. En effet, l'aire interfaciale d'un tel milieu est un paramètre fondamental qui régit les echanges de chaleur ou de masse dans les contacteurs gaz-liquide couramment utilisée en génie chimique. En conséquence, la mesure de cette grandeur est d'un intérêt capital pour l'étude et le contrôle du fonctionnement de tels contacteurs ainsi que pour leur mise au point.

On rappellera que l'aire interfaciale par unité de volume, encore appelée parfois surface spécifique, est donnée par la relation:

$$\gamma = \tfrac{6\alpha}{Deq},$$

formule dans laquelle $\alpha$ est le taux de vide égal au rapport du volume de gaz au volume total de gaz plue liquide au sein de l'écoulement et Deq est le diamètre équivalent des bulles de gaz présentes dans l'écoulement.

De façon connue, le taux de vide $\alpha$ peut par exemple se mesurer par une méthode manométrique; quant au diamètre équivalent des bulles on le calcule par une méthode photographique.

Jusqu'à ce jour, il existe quatre méthodes connues pour mesurer les aires interfaciales d'un tel mélange diphasique en écoulement dans une conduite ou dans un réacteur agité.

La première méthode est une méthode photographique, qui consiste à mesurer le diamètre des bulles après en avoir pris un cliché photographique. Elle a pour inconvénient de nécessiter pour le mélange diphasique de se situer dans un récipient transparent, de ne permettre des mesures qu'en ce qui concerne des ensembles de bulles situées près de la paroi et, surtout, de nécessiter un dépouillement long et fastidieux au cours duquel chaque bulle doit être mesurée individuellement.

La deuxième méthode connue est la méthode chimique qui consiste à provoquer l'oxydation d'une solution aqueuse de sulfite de sodium par l'oxygène contenu dans la phase gazeuse. Cette méthode a l'inconvénient d'être limitée aux écoulements permanents et de requérir l'emploi de fluides spéciaux complémentaires et différents de ceux des fluides participant directement au processus industriel d'échange de chaleur ou de masse. Par ailleurs, les résultats obtenus dépendent de la forme géométrique du contacteur. A ce sujet, elle nécessite un étalonnage préalable sur un contacteur de référence dont la mise au point et le fonctionnement sont très délicats. Enfin, la mise en oeuvre pratique de cette méthode chimique est très longue et elle demande plusieurs jours pour obtenir une estimation correcte de l'aire interfaciale mesurée.

La troisième méthode connue est une méthode optique qui utilise l'atténuation de l'intensité d'un faisceau lumineux traversant le volume dans lequel s'écoule le mélange diphasique. Cette méthode optique présente évidemment l'inconvénient de nécessiter, pour ledit récipient, d'avoir des parois transparentes.

La quatrième méthode également connue fait appel à l'utilisation de sondes locales de détection d'interfaces qui sont introduites dans le contacteur gaz liquide lui-même. En conséquence, elle a le grave inconvénient de perturber l'écoulement que l'on veut examiner et de nécessiter de plus de prévoir des passages pour l'introduction des sondes dans les parois du récipient ou de la canalisation contenant l'écoulement diphasique. Enfin, cette méthode ne peut pratiquement être utilisée que dans le cas des colonnes à bulles.

L'examen de milieux diphasiques en écoulement, tels que notamment des liquides contenant des bulles gazeuses, a déjà été réalisé à l'aide d'ondes acoustiques ultrasonores.

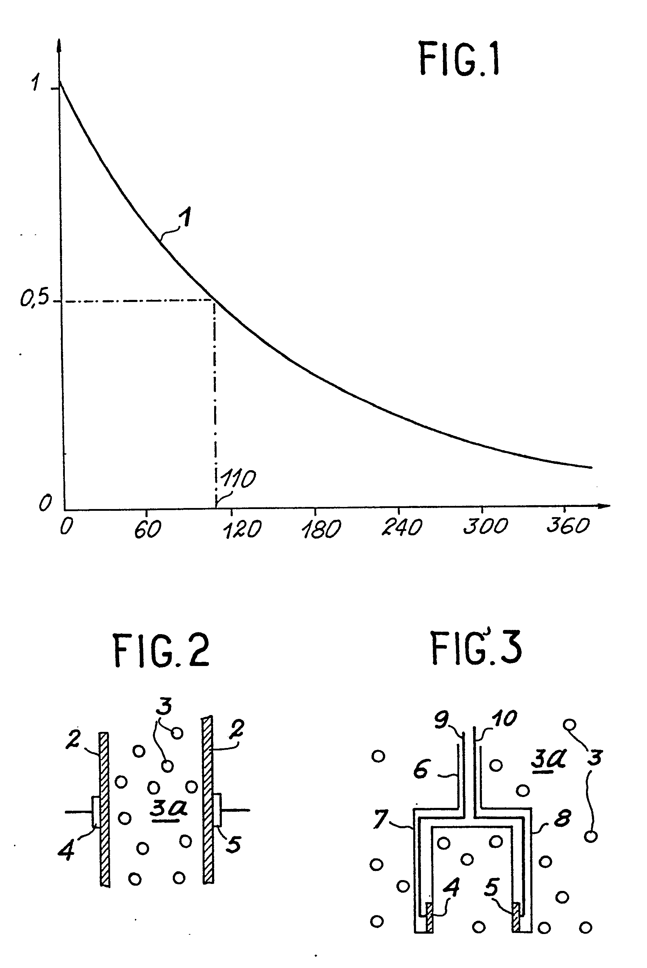

Le document "An ultrasonic bubble detector", Instrument Society of America, 19th Annual ISA Conference and Exhibit, 12-15 Oct. 1964, New York, est relatif à la détection de la présence de bulles dans un milieu liquide. Il fonctionne à l'aide de deux transducteurs placés de part et d'autre de la canalisation parcourue par le liquide que l'on veut surveiller (voir fig. 1) et c'est en analysant l'énergie qui atteint le transducteur récepteur que l'on détermine les propriétés particulières du liquide parcourant la canalisation et en particulier s'il existe ou non des bulles dans ce liquide. Le procédé permet de mettre en évidence la présence de bulles d'un diamètre de 1 millième de pouce, sans donner toutefois, de moyens de détermination de l'aire interfaciale des bulies avec le liquide,

Le brevet US-A-4 015 464 est relatif à un appareil pour détecter la présence de particules dans un milieu fluide en étudiant la phase et l'amplitude d'ondes ultra sonores que l'on a fait passer au travers du liquide. Cette technique, utilisée notamment pour la surveillance de la qualité du sang durant les opérations à coeur ouvert, permet également le cas échéant la détection de bulles dans le sang (voir en particulier ligne 50, colonne 3).

La mesure faite ici est une mesure de modulation de phase et d'amplitude au cours de la traversée du liquide sur des ondes ultra sonores envoyées dans celui-ci. Ce document décrit la surveillance de l'apparition de bulles d'air dans le sang à l'aide, notamment, de deux transducteurs ultrasonores (13, 15) situés à une certaine distance l'un de l'autre sur les parois d'une enceinte en contact avec le mélange diphasique et fonctionnant l'un (13) en émetteur et l'autre en récepteur (15), et à la sortie du récepteur et en série, un amplificateur (17) et un détecteur de crête (87).

Pas plus que le précédent, ce document ne met sur la voie ou ne fait connaître une méthode de détermination de cette grandeur très spécifique qu'est l'aire interfaciale des bulles d'air avec le sang.

La présente invention a précisément pour objet un procédé de détermination de l'aire interfaciale dans un volume contenant un tel mélange diphasique en écoulement qui permet, d'une façon simple, de surmonter les inconvénients de l'art antérieur tels qu'ils viennent d'être rappelés précédemment.

Ce procéde consiste principalement à déterminer pour un même trajet d'une suite de trains d'ondes acoustiques ultrasonores émis à amplitude constante dans ce volume, le rapport des moyennes des amplitudes maximales des trains d'ondes reçus après traversée du mélange diphasique et après traversée de la phase liquide seule. L'aire interfaciale est ensuite déterminée au moyen d'une courbe d'étalonnage tracée expérimentalement donnant la valeur de cette aire en fonction de ce rapport.

Ce procédé de détermination de l'aire interfaciale dans un volume contenant un mélange diphasique comprenant une phase liquide et une phase gazeuse en écoulement dans la phase liquide sous forme de bulles, comportant l'émission vers le mélange d'une onde acoustique ultxasonore et l'examen de cette onde après traversée du mélange, en déterminant, pour un même trajet d'une suite de trains d'ondes acoustiques ultrasonores émis à amplitude constante dans ce volume, le rapport des moyennes des amplitudes maximales des trains d'ondes refus après traversée du mélange diphasique et après traversée de la phase liquide seule, puis en reportant la valeur ainsi établie de ce rapport sur une courbe étalon donnant la valeur de l'aire interfaciale en fonction de ce rapport.

Le recours aux techniques ultrasonores permet, conformément à l'invention, de travailler sur des écoulements situés dans des conduites ou des récipients à parois opaques et l'emploi de trains d'ondes successifs permet de bien séparer, au niveau de la réception des ondes, chacun des trains reçus successivement sans qu'aucune interférence d'un train à l'autre ne vienne perturber les résultats. Comme on l'expliquera dans un passage suivant du texte, la mise en oeuvre de ce procédé repose sur la découverte du fait que la présence de bulles gazeuses en écoulement dans un liquide ne modifie pas la forme générale des trains d'ondes reçus après la traversée du liquide seul, mais modifie simplement l'amplitude des signaux et notamment la crête de la première partie de ce signal. Cette constatation, assez inattendue, permet par conséquent de mesurer l'amortissement de la crête du signal reçu lorsque les bulles gazeuses parcourent l'écoulement, et d'en déduire par rapport à une courbe d'étalonnage tracée expérimentalement, la valeur exacte de l'aire interfaciale.

Dans une mise en oeuvre préférée du procédé objet de l'invention, les trains d'ondes sonores ont une longueur d'onde nettement supérieure au diamètre des bulles.

La présente invention a également pour objet un dispositif pour la mise en oeuvre du procédé précédent comportant deux transducteurs ultrasonores situés à une certaine distance l'un de l'autre sur les parois d'une enceinte en contact avec le mélange diphasique et fonctionnant l'un en émetteur et l'autre en récepteur, ainsi qu'à la sortie du récepteur et en série, un amplificateur, un détecteur de crête qui se caractérise en ce qu'il comporte en outre:

- un échantillonneur-bloqueur et un filtre passe-bas en série avec ledit détecteur;

- un premier monostable apte à déclencher l'échantillonneur-bloqueur pour mémoriser l'amplitude maximale de chaque train d'ondes;

- un second monostable apte à remettre le détecteur de crête à zéro entre deux trains d'ondes consécutifs;

- un diviseur pour effectuer le rapport des moyennes des amplitudes des trains d'ondes reçus après traversée du mélange diphasique et après traversée de la phase liquide seule.

De toute façon, l'invention sera mieux comprise en se référant à la description qui suit d'un exemple de mise en oeuvre du procédé de détermination de l'aire interfaciale, exemple qui sera décrit et commenté à titre illustratif et non limitatif en se référant aux figures 1 à 8 ci-jointes dans lesquelles:

- la figure 1 représente la courbe d'étalonnage d'un signal normalisé dans un écoulement diphasique tel qu'on l'utilise dans le procédé objet de l'invention,

- la figure 2 représente schématiquement un premier montage des transducteurs ultrasonores utilisé pour la mise en oeuvre du procédé objet de l'invention,

- la figure 3 représente un deuxième montage utilisé pour les contacteurs de grandes dimensions, permettant de placer l'émetteur et le récepteur ultrasonore dans le milieu où se situe l'écoulement,

- la figure 4 montre la forme des trains d'ondes en amplitude en fonction du temps émis par le générateur ultrasonore,

- la figure 5 montre les amplitudes en fonction du temps du signal ultrasonore reçu par le transducteur récepteur en l'absence de bulles gazeuses dans le milieu d'écoulement,

- la figure 6 montre les amplitudes en fonction du temps des trains d'ondes ultrasonores reçus par le transducteur récepteur en présence d'un écoulement de bulles gazeuses dans le volume étudié,

- la figure 7 représente schématiquement le dispositif de mesure objet de l'invention,

- la figure 8 montre le schéma des différentes impulsions de commande de détection et de mesure au niveau de chacun des composants du dispositif de la figure 7.

La figure 1 montre une courbe étalonnée par la méthode photographique d'un signal normalisé dans le cas d'un écoulement de bulles d'air dans un volume d'eau. On a donc porté sur cette figure en ordonnées le rapport de la moyenne des amplitudes maximales des trains d'ondes reçus à la sortie du mélange diphasique à la moyenne des amplitudes maximales des trains d'ondes reçus à la traversée de l'eau seule. Les ordonnées sont graduées de 0, correspondant à l'air pur, à 1, correspondant à l'eau pure. En abscisses, on a porté la valeur de l'aire interfaciale en metre$^{-1}$ puisqu'il s'agit en effet d'une surface specifique par unité de volume. La courbe 1 de la figure 1 représente une fonction continue et décroissante à partir de la valeur 1 du signal normalisé correspondant à l'eau seule et la valeur de ce signal décroît régulièrement en fonction de l'augmentation de l'aire interfaciale par unité de volume au sein de l'écoulement diphasique. Cette fonction étant biunivoque, on voit qu'à toute valeur déterminée du signal normalisé correspond une valeur et une seule de l'aire interfaciale. Par exemple, lorsque le rapport des moyennes des amplitudes maximales est de 0,5, on voit sur la figure 1 que la valeur de l'aire interfaciale est de l'ordre de 110 m$^2$ de surface spécifique par mètre cube de mélange. L'invention consistant à mesurer par des moyens ultrasonores le rapport précédent des moyennes des amplitudes maximales, c'est donc à l'aide d'une courbe comme celle de la figure 1 préétalonnée sur le mélange à examiner, que l'on effectue finalement la lecture de la valeur de l'aire interfaciale recherchée.

De façon pratique, l'invention propose deux types de montages pour l'examen ultrasonore de l'écoulement diphasique à effectuer.

Sur la figure 2, on a montré le premier montage, qui est également le plus simple, pour des contacteurs de petites dimensions tels que par exemple une canalisation 2 dont les parois sont relativement rapprochées. Dans ce cas, les bulles de gaz 3 s'écoulant dans la phase liquide 3a sont examinées à l'aide des deux transducteurs sonores que sont l'émetteur 4 et le récepteur 5 situés comme l'indique la figure 2 de part et d'autre des parois du tube 2 selon un diamètre de ce dernier.

Le montage de la figure 3, qui est réservé pour les contacteurs de grandes dimensions, comporte comme celui de la figure 2 un transducteur émetteur 4 et un transducteur récepteur 5 mais situés sur un support 6 en forme de fourche que l'on immerge au sein de l'écoulement des bulles 3 dans le liquide 3a. Les branches latérales 7 et 8 de ce support 6 servent au passage des deux conducteurs 9 et 10 alimentant respectivement l'émetteur 4 et le récepteur 5.

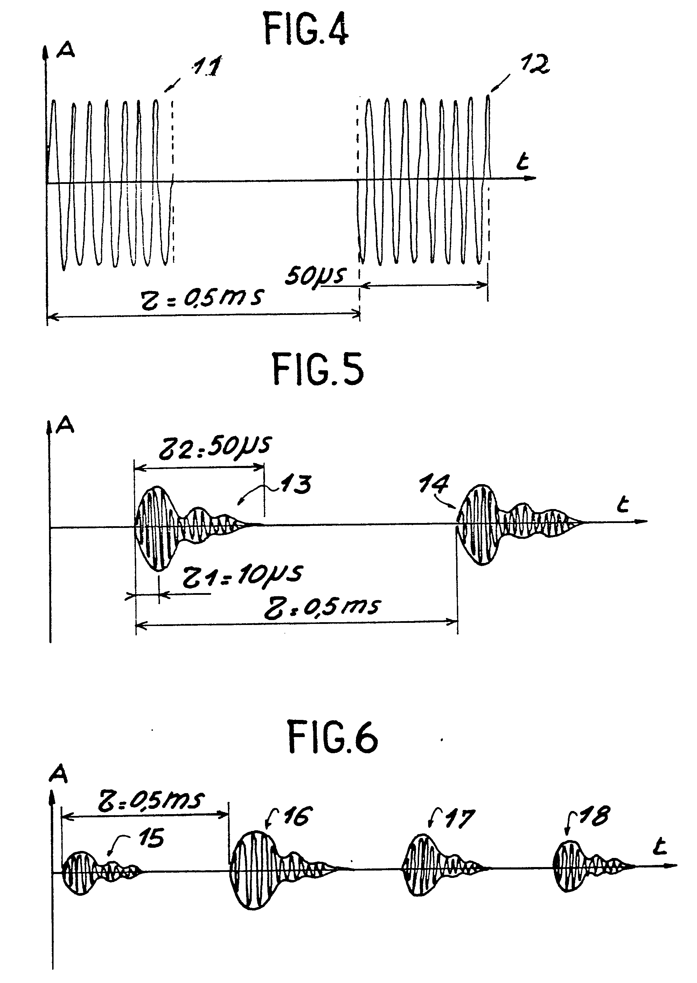

Sur la figure 4, on a représenté les amplitudes en fonction du temps des trains d'ondes ultrasonores émis par le transducteur émetteur 4.

Dans l'exemple de la figure 4, on voit deux trains d'ondes successifs 11 et 12 d'une durée chacun de 50 microsecondes et séparés par un intervalle de 0,5 milliseconde. La fréquence d'oscillation de l'onde ultrasonore dans chacun des trains est de l'ordre de 750 kHz.

L'intervalle de temps entre deux trains d'ondes émis et la durée de chaque train d'ondes émis doivent être tels qu'il n'y ait pas de superposition de deux trains d'ondes successifs à la réception.

La fréquence d'oscillation de l'onde ultrasonore dans chacun des trains d'ondes doit être telle que la longueur d'onde correspondante dans le liquide soit nettement supérieure au diamètre des bulles.

La figure 5 représente les amplitudes en fonction du temps des trains d'ondes successifs reçus par le récepteur 5 après la traversée du liquide en l'absence de bulles. On voit que les trains d'ondes 13 et 14 qui correspondent respectivement à la réception des trains d'ondes 11 et 12 de la figure 4 sont toujours séparés par le même intervalle de temps de 0,5 milliseconde et ont la même durée de 50 microsecondes, mais que leur forme est très sensiblement modifiée par rapport au train d'ondes émis 11 et 12. En effet, ils se composent d'une part d'un front de montée d'une durée de l'ordre de 10 microsecondes dû au délai de réponse des transducteurs et, en fin de signal, d'un certain nombre de réflexions de l'onde au sein du milieu ou sur les parois du récipient.

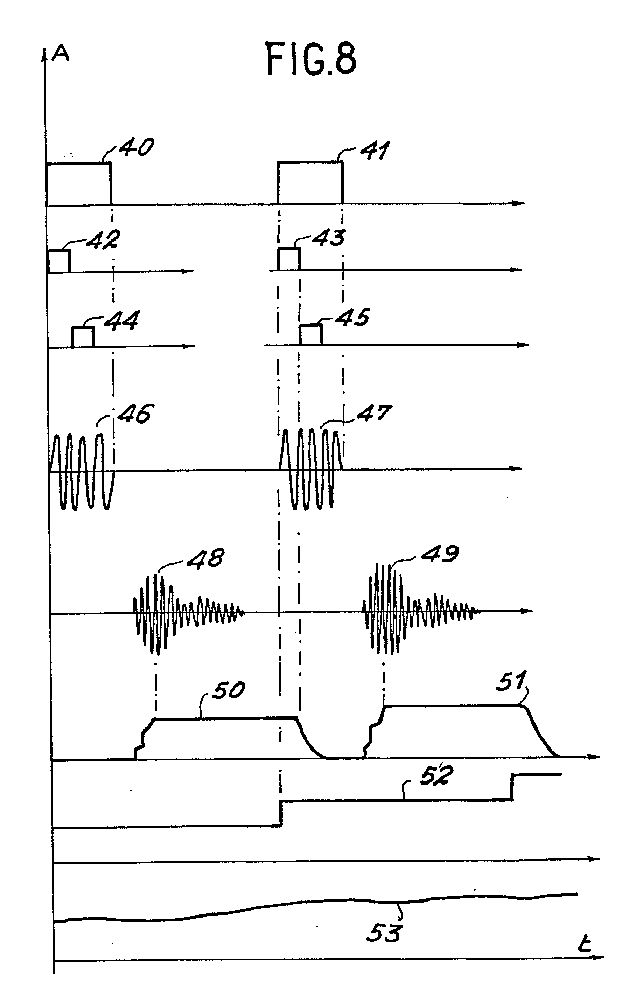

Si maintenant on vient modifier les conditions physiques du milieu en le faisant parcourir par un écoulement de bulles gazeuses, on observe alors les résultats visibles sur la figure 6 qui montrent toujours les amplitudes en fonction du temps des divers trains d'ondes reçus par le transducteur 5. On observe alors que ces trains d'ondes, toujours séparés l'un de l'autre par un temps de 0,5 milliseconde, ont tous sensiblement la même forme générale, c'est-à-dire que l'enveloppe du signal conserve le même profil; en revanche, le signal obtenu a une amplitude qui est atténuée de façons diverses sur les différents trains d'ondes 15, 16, 17 et 18 de la figure 8 qui correspondent à des densités de bulles s'écoulant dans le liquide entre les deux transducteurs 4 et 5 différentes au moment de la propagation de chaque train d'ondes.

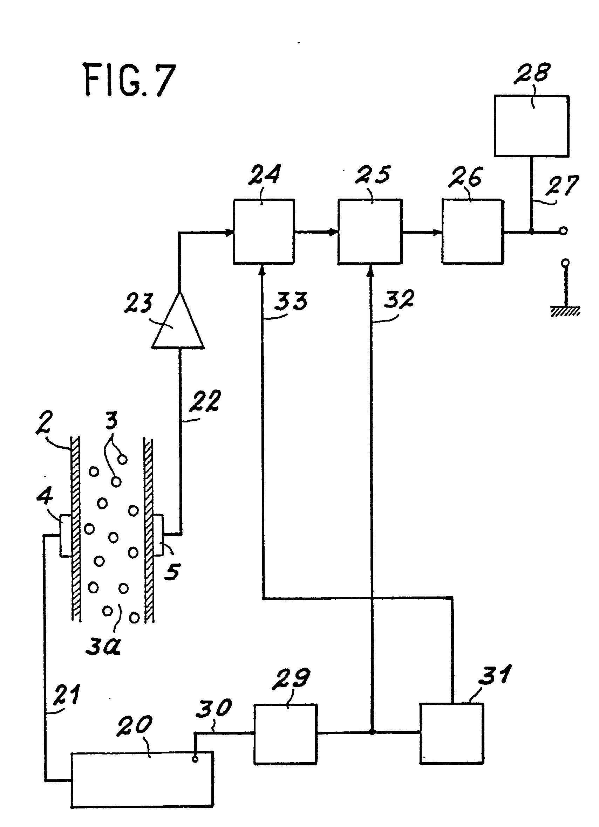

De façon pratique, et pour un taux de vide et une taille de bulles gazeuses déterminées, on cherchera à connaître la moyenne des amplitudes maximales des différents trains d'ondes reçus de façon à compenser les fluctuations d'un train d'ondes à l'autre. C'est à l'aide du dispositif de la figure 7 que l'on effectue cette mesure de la moyenne de l'amplitude maximale des trains d'ondes reçus.

Sur cette figure 7, on a représenté un écoulement diphasique de bulles gazeuses 3 dans un liquide 3a traversant une tuyauterie 2. L'émetteur ultrasonore 4 et le récepteur ultrasonore 5 sont dans la même position que dans le montage de la figure 2.

Les trains d'ondes acoustiques ultrasonores sont engendrés par le générateur 20 qui alimente par la ligne 21 le transducteur émetteur 4. A la sortie 22 du récepteur 5 se trouvent situés, en série, un amplificateur de courant 23 suivi d'un détecteur de crête 24, un échantillonneur-bloqueur 25 et un filtre passe-bas 26. Le détecteur de crête 24 a pour but de déterminer l'amplitude maximale d'un train d'ondes reçu et l'échantillonneur bloqueur met en mémoire la valeur de cette amplitude maximale. Le filtre passe-bas 26 détermine la moyenne des signaux recueillis par l'échantillonneur-bloqueur 25. A la sortie du filtre passe-bas 26, un conducteur 27 alimente le diviseur 28 qui permet de faire le rapport des valeurs moyennes déterminées par le filtre passe-bas 26 d'une part dans le liquide seul en l'absence de bulles et, dd'autre part, en présence de l'écoulement de bulles gazeuses.

Un premier circuit monostable 29 relié au générateur de signaux ultrasonores 20 par la ligne 30 commande par la ligne 32 l'échantillonneur-bloqueur 25 dont il déclenche le fonctionnement à chaque train d'impulsions. Un deuxième circuit monostable 31 commande, par l'intermédiaire du conducteur 33, la remise à zéro du détecteur de crête 24 après chaque enregistrement par l'échantillonneur-bloqueur 25. On peut remarquer que les deux circuits monostables 29 et 31 constituent la partie logique du dispositif de traitemeni alors que le détecteur de crête 24, l'échantillonneur bloqueur 25 et le filtre passe-bas 26 en sont la partie analogique puisqu'ils fournissent des grandeurs électriques représentatives des amplitudes maximales des trains d'ondes ultrasonores reçus.

Pour plus de précision, on peut indiquer qu'en fait le générateur d'impulsions ultrasonores 20 est double, à savoir qu'il comporte un premier générateur qui engendre des impulsions carrées commandant le second générateur qui engendre les ondes sinusoïdales. Il en résulte ainsi des trains d'ondes tels qu'on va les voir maintenant dans les schémas explicatifs de la figure 8 qui permet de mieux comprendre le déroulement du traitement des signaux. Dans ce schéma, les amplitudes sont indiquées en ordonnées et le temps en abscisses.

Sur la figure 8, on voit d'abord les signaux carrés 40 et 41 émis par la première partie du générateur ultrasonore 20. Sur les deux lignes suivantes sont dessinées les impulsions carrées 42 et 43 du premier circuit monostable 29 et les impulsions carrées 44 et 45 du deuxième circuit monostable 31. Sur la ligne suivante, on voit les deux trains d'ondes 46 et 47 à la fréquence de 750 kHz tels qu'ils sont engendrés par la deuxième partie du générateur d'ondes ultrasonores 20 et dont les durées sont délimitées par les impulsions rectangulaires 40 et 41 du premier générateur. Ces trains d'ondes ultrasonores 46 et 47 sont ceux qui sont appliqués directement par le conducteur 21 au transducteur émetteur 4. Sur la ligne suivante sont représentés en 48 et 49 les trains d'ondes reçus après la traversée de l'écoulement diphasique par le récepteur 5, chacun d'entre eux correspondant respectivement, pour le train d'ondes 48 au train d'ondes 46, et pour le train d'ondes 49 au train d'ondes 47. Sur la ligne suivante, on voit comment les amplitudes maximales atteintes par les trains d'ondes 48, 49 sont prises en compte par le détecteur de crête 24 qui les transforme en signaux d'amplitude constante 50 et 51 jusqu'à ce que l'impulsion correspondante (ici 45) du deuxième circuit monostable 31 commande la remise à zéro du détecteur de crête.

Sur la ligne suivante, on voit comment l'échantillonneur-bloqueur 25 commandé par les impulsions du premier circuit monostable 29 engendre un signal carré 52 représentatif de cette même amplitude maximale. A la sortie du filtre passe-bas 26, on obtient alors le signal 53 qui représente la valeur moyenne des différentes amplitudes 52 enregistrées dans l'échantillonneur-bloqueur 25 à la suite de la réception d'un grand nombre de trains d'ondes ultrasonores tels que 48 ou 49. Il suffit alors de réaliser la même mesure avec le même dispositif en l'absence des bulles gazeuses 3 dans la canalisation 2, pour avoir une autre valeur à la sortie du filtre passe-bas 26 de la moyenne des amplitudes des trains d'ondes sortants et de faire le rapport de ces deux moyennes pour lire, en reportant la valeur ainsi trouvée sur une courbe préétalonnée comparable à celle de la figure 1, la valeur recherchée du coefficient de l'aire interfaciale dans le volume examiné.

Le procédé et le dispositif objet de l'invention trouvent ainsi de nombreuses applications dans la mise au point et le contrôle du fonctionnement des contacteurs à bulles, tels que colonnes à bulles et réacteurs agités que l'on utilise dans le génie chimique. Ils permettent également de suivre l'évolution d'un écoulement diphasique en étudiant les variations de l'aire interfaciale, ce qui permet par exemple de contrôler l'état de l'écoulement dans certains composants de réacteurs nucleaires à eau ainsi que dans les conduites de transport de produits pétroliers.

**Revendications**

1. Procédé de détermination de l'aire interfaciale dans un volume contenant un mélange diphasique comprenant une phase liquide (3a) et une phase gazeuse en écoulement dans la phase liquide sous forme de bulles (3), comportant l'émission vers le mélange d'une onde acoustique ultrasonore et l'examen de cette onde après traversée du mélange, en déterminant, pour un même trajet d'une suite de trains d'ondes acoustiques ultrasonores (15, 18) émis à amplitude constante dans ce volume, le rapport des moyennes des amplitudes maximales des trains d'ondes reçus après traversée du mélange diphasique et après traversée de la phase liquide seule, puis en reportant la valeur ainsi établie de ce rapport sur une courbe étalon donnant la valeur de l'aire interfaciale en fonction de de rapport.

2. Procédé de détermination de l'aire interfaciale selon la revendication 1, caractérisé en ce que les trains d'ondes ultrasonores (15, 18) ont une longueur d'onde nettement supérieure au diamètre des bulles.

3. Dispositif pour la mise en oeuvre du procédé selon l'une quelconque des revendications 1 et 2 précédentes, comportant deux transducteurs ultrasonores (4, 5) situés à une certaine distance l'un de l'autre sur les parois (2, 6) d'une enceinte en contact avec le mélange diphasique et fonctionnant l'un en émetteur (4) et l'autre en récepteur (5), ainsi qu'à la sortie du récepteur (5) et en série, un amplificateur (23) et un détecteur de crête (24), caractérisé en ce qu'il comporte en outre:

- un échantillonneur-bloqueur (25) et un filtre passe-bas (26) en série avec ledit déteteur (24),
- un premier monostable (29) apte à déclencher l'échantillonneur-bloqueur (25) pour mémoriser l'amplitude maximale de chaque trains d'ondes,
- un second monostable (31) apte à remettre le détecteur de crête (24) à zéro entre deux trains d'ondes consécutifs,
- un diviseur (28) pour effectuer le rapport des moyennes des amplitudes des trains d'ondes reçus après traversée du mélange diphasique et après traversée de la phase liquide seule.

## Patentansprüche

1. Verfahren zur Bestimmung der Grenzfläche einer in einem Volumen enthaltenen zweiphasigen Mischung die eine Flüssigphase (3a) und eine Gasphase in Form eines Blasenstroms (3) in der Flüssigphase aufweist, wobei das Verfahren das Aussenden einer Ultraschallwelle zu der Mischung und die Untersuchung dieser Welle nach ihrem Durchtritt durch die Mischung umfaßt, indem für eine gleiche Strecke bei einer Folge von mit konstanter amplitude in dieses Volumen ausgesandten Ultraschallwellenzügen (15, 18) das Verhältnis der Mittel der maximalen Amplituden der nach dem Durchtritt durch die zweiphasige Mischung und nach dem Durchtritt durch allein die Flussigphase erhaltenen Wellenzüge bestimmt, und daraufhin der aufgrund dieses Verhältnisses derart bestimmte Wert auf eine Eichkurve übertragen wird die den Wert für die Grenzfläche als Funktion dieses Verhältnisses liefert.

2. Verfahren zum Bestimmen der Grenzfläche nach Anspruch 1, dadurch gekennzeichnet daß die Ultraschallwellenzüge (15, 18) eine Wellenlänge aufweisen, die deutlich größer als der Durchmesser der Blasen ist.

3. Vorrichtung zur Durchführung des Verfahrens nach dem vorstehenden Anspruch 1 oder 2 mit zwei Ultraschallwandlern (4, 5), die mit einem gewissen Abstand voneinander an den Wänden (2, 6) eines mit der zweiphasigen Mischung in Berührung stehenden Raumes angeordnet sind und von denen einer als Sender (4) und der andere als Empfänger (5) arbeitet sowie mit einem Verstärker (23) und einem Spitzendetektor (24) an dem Ausgang des Empfängers (5) und in Reihe mit demselben, dadurch gekennzeichnet, daß die Vorrichtung ferner umfaßt:

- einen Probenblockierer (25) und ein Tiefpaßfilter (26) in Reihe mit dem Detektor,
- einen ersten monostabilen Multivibrator (29), mit dem der Probenblockierer (25) auslösbar ist, um die maximale Amplitude eines jeden Wellenzuges zu speichern,
- einen zweiten monostabilen Multivibrator (31), mit dem der Spitzendetektor (24) zwischen zwei aufeinanderfolgenden Wellenzügen auf Null zurucksetzbar ist,
- eine Teilereinrichtung (28), mit der das Verhältnis der Mittel der Amplituden der nach dem Durchtritt durch die zweiphasige Mischung und nach dem Durchtritt durch allein die Flüssigphase erhaltenen Amplituden der Wellenzüge bestimmbar ist.

## Claims

1. Process for determining the interfacial area in a volume containing a two-phase mixture comprising a liquid phase (3a) and a gas phase flowing in the liquid phase in the form of bubbles (3), comprising the transmission of an ultrasonic acoustic wave towards the mixture and the inspection of this wave after passage through the mixture, by determining, for the same single path of a series of ultrasonic acoustic wave trains (15, 18) transmitted at constant amplitude into this volume, the ratio of the means of maximum amplitudes of the wave trains received after a passage through the two-phase mixture and after a passage through the liquid phase alone, and by then referring the value of this ratio, established in this manner, to a calibration curve giving the value of the interfacial area as a function of the ratio.

2. Process for determining the interfacial area according to claim 1, characterized in that the trains of ultrasonic waves (15, 18) have a wavelength which is markedly greater than the diameter of the bubbles.

3. Device for implementing the process according to either of the above claims 1 and 2, comprising two ultrasonic transducers (4, 5) situated at a certain distance from each other on the walls (2, 6) of an enclosure in contact with the two-phase mixture, with one operating as the transmitter (4) and the other as the receiver (5), as well as, at the output of the receiver (5) and in series, an amplifier (23) and a peak detector (24), characterized in that it additionally comprises:

- a sampler-block recorder (25) and a low-pass filter (26) in series with the said detector (24),

- a first monostable (29) capable of triggering the sampler-block recorder (25) to store the maximum amplitude of each wave train,

- a second monostable (31) capable of rezeroing the peak detector (24) between two consecutive wave trains, and

- a divider (28) for determining the ratio of the means of the amplitudes of the wave trains received after a passage through the two-phase mixture and after a passage through the liquid phase alone.

# FIG.1

# FIG.2

# FIG.3

0 1 2 3 6 0 6

# FIG.4

$Z = 0.5\,ms$

$50\mu s$

# FIG.5

$Z2 = 50\mu s$

$Z1 = 10\mu s$

$Z = 0.5\,ms$

# FIG.6

$Z = 0.5\,ms$

3

FIG.7

# FIG.8